# EUROPEAN PATENT SPECIFICATION

(11) **EP 2 679 519 B1**
(45) Date of publication and mention of the grant of the patent: **10.08.2016**
(21) Application number: 13173279.4
(22) Date of filing: 21.06.2013
(51) Int. Cl.: B65D 85/808, B65D 85/812

(54) **Foldable covering structure for brewing materials.**
Faltbare Abdeckstruktur für Braumaterialien
Structure de recouvrement pliable pour matériaux de brassage

(30) Priority: 25.06.2012 TW 101212152
(43) Date of publication of application: 01.01.2014
(73) Proprietor: Tseng, Yi-Pin, 116 Taipei City (TW)
(72) Inventor: Tseng, Yi-Pin, 116 Taipei City (TW)
(74) Representative: Chaillot, Geneviève

(56) References cited:
- EP-A1- 1 495 992
- CN-U- 202 828 560
- US-A- 5 806 408
- US-A1- 2003 170 345

## Description

### BACKGROUND OF THE INVENTION

### 1. Field of the invention

The present invention relates to a covering structure for brewing materials, particularly a conjoint foldable covering structure for brewing materials which has a foldable body with both ends joining lids.

### 2. Description of the prior art

Tea bags which facilitate brewing of quantitative clean tea water have been widely adopted in offices or receptions. In general, tea leaves are held in a conventional small-sized tea bag to which a piece of thread is connected wherein the thread links the bag's upper edge and a paper label kept outside a cup. The small-sized bags, each of which has flat appearance, facilitate tea leaves packaged in small volume. However, tea leaves held in limited space of a conventional small-sized tea bag are usually transformed to tea dust in a grinding process due to incomplete stretch of tea leaves in a brewing process.

Against this background, a cube tea bag made up of polyhedrons for development of triangular cubic interior space has been available in the market and facilitates effective brewing of tea leaves in a tea bag.

However, the triangular cubic shape of the cube tea bag before brewing is unfavorable to a process adopted in the industry to package tea leaves in flat tea bags. Moreover, the triangular cubic shape of the cube tea bag leaves its corner spaces not effectively used in a brewing process and a cube tea bag in which tea leaves swell is difficultly removed from a container.

Accordingly, the inventor offers the present invention featuring rational design without defects of a conventional tea bag after studying relevant rationales.

Document EP 1 495 992 A1 discloses a conjoint foldable covering structure as defined in the preamble of claim 1.

### SUMMARY OF THE INVENTION

The present invention presents a conjoint foldable covering structure for brewing materials which facilitates operations to brew and store brewing materials by means of separable and conjoint components for better stability.

In preferred embodiments, the present invention presents a conjoint foldable covering structure for brewing materials according to claim 1.

Preferably, the conjoint foldable covering structure for brewing materials further comprises a paper label and a piece of thread with both ends connected to the second lid and the paper label, respectively.

Preferably, the stretching direction is approximately parallel to a vertical line.

It can be seen from above disclosure that the present invention of a conjoint foldable covering structure for brewing materials with the foldable body, the first lid, and the second lid designed as separable and conjoint components is capable of maintaining a shape of the foldable body immersed in water when both ends of the foldable body adjustably stretch along the stretching direction.

### BRIEF DESCRIPTION OF THE DRAWINGS

FIG. 1 is a schematic view of an example of a conjoint foldable covering structure for brewing materials not according to the invention;
FIG. 2 is an exploded view of an example a conjoint foldable covering structure for brewing materials not according to the invention
FIG. 3 is a schematic view illustrating Step S110 with respect to an example of a conjoint foldable covering structure for brewing materials not according to the invention;
FIG. 3A is a partial enlargement view of FIG. 3;
FIG. 3B is a further partial enlargement view of FIG. 3;
FIG. 4 is a schematic view illustrating Step S120 with respect to an example of a conjoint foldable covering structure for brewing materials not according to the invention;
FIG. 5 is a schematic view illustrating Step S130 with respect to an example of a conjoint foldable covering structure for brewing materials not according to the invention;
FIG. 5A is a partial enlargement view of FIG. 5;
FIG. 5B is a further partial enlargement view of FIG. 5;
FIG. 6 is a schematic view illustrating Step S140 with respect to an example of a conjoint foldable covering structure for brewing materials not according to the invention;
FIG. 7 is a schematic view illustrating Step S150 with respect to an example of a conjoint foldable covering structure for brewing materials not according to the invention;
FIG. 8 is a schematic view illustrating Step S160 with respect to an example of a conjoint foldable covering structure for brewing materials not according to the present invention;
FIG. 9 is a first schematic view illustrating a process to use an example of a conjoint foldable covering structure for brewing materials not according to the present invention;
FIG. 10 is a second schematic view illustrating a process to use an example of a conjoint foldable covering structure for brewing materials not according to the present invention;
FIG. 11 is a schematic view of an example of a conjoint foldable covering structure for brewing materials not according to the present invention;
FIG. 12 is a schematic view illustrating the present invention of a conjoint foldable covering structure for brewing materials with both ends of a foldable body arriving at brewing positions;
FIG. 13 is a schematic view illustrating the present invention of a conjoint foldable covering structure for brewing materials with both ends of a foldable body arriving at retractive positions as well as a first upholder and a second upholder resisting each other; and FIG. 14 is a schematic view of an example of a conjoint foldable covering structure for brewing materials not according to the present invention

### DETAILED DESCRIPTION OF THE PREFERRED EMBODIMENT

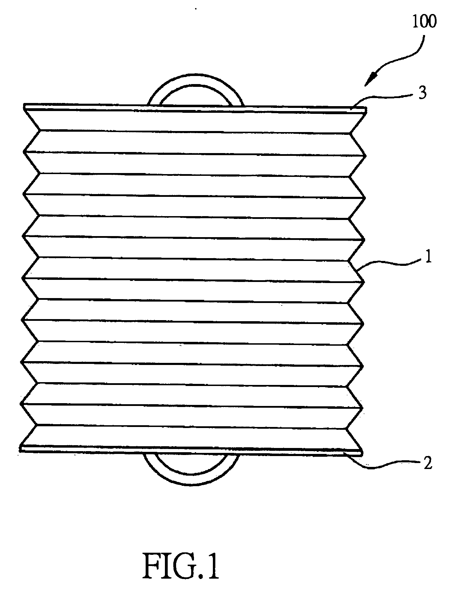

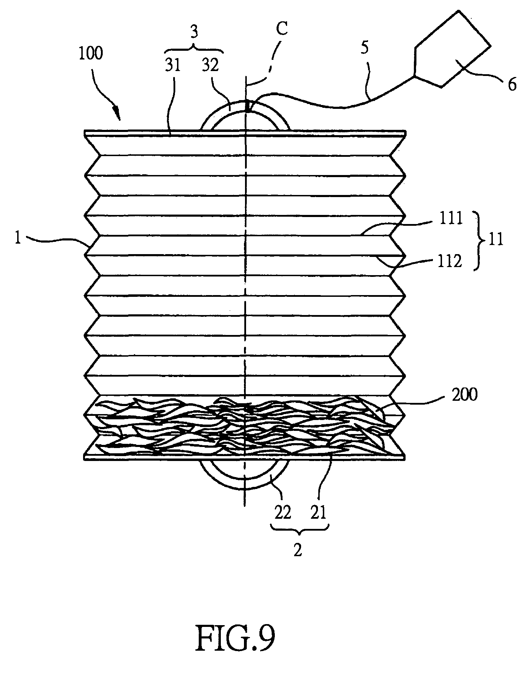

Refer to FIG. 1 that illustrates of a conjoint foldable covering structure for brewing materials 100 in which brewing materials 200 (FIG. 9) are held: an example the brewing materials 200 before and after soaking in water should present a first state and a second state, respectively.

Incidentally, FIG. 1 is a side view through which the brewing materials 200 inside are not directly observed. However, the conjoint foldable covering structure for brewing materials 100 in practical use may have a transparent or translucent appearance through which the brewing materials 200 inside can directly watched.

Moreover, the brewing materials 200 in this example include, without limitation, raw tea leaves which are samples described herein. For example, the brewing materials 200 can be crude drug (e.g., Cordyceps sinensis), ground coffee (particularly non-instant coffee), health tea, herb tea, etc.

Furthermore, the conjoint foldable covering structure for brewing materials 100 comprises a foldable body 1 which allows water flows to penetrate, a first lid 2, and a second lid 3.

The foldable body 1, the first lid 2, and the second lid 3 are made of paper in general or other materials in practical use. For example, the foldable body 1, the first lid 2, and the second lid 3 can be made of cloth, nylon, plastic, or aluminum foil.

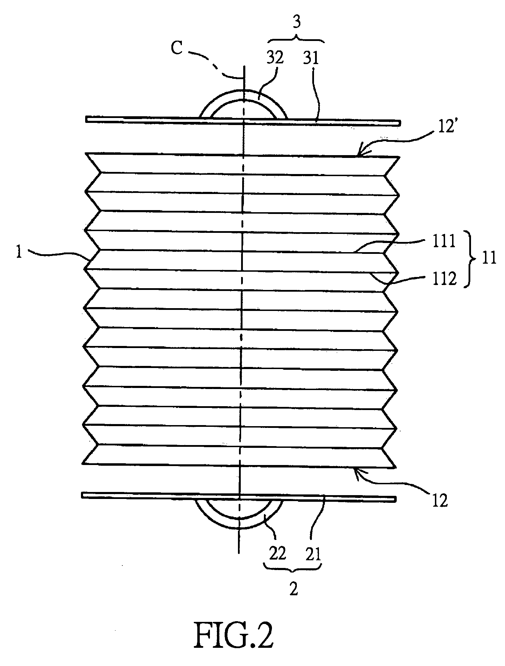

Moreover, the foldable body 1, the first lid 2, and the second lid 3 in this example are separable components which are assembled to be the conjoint foldable covering structure for brewing materials 100. FIG. 2 presents conformation of the foldable body 1, the first lid 2, and the second lid 3.

In general, the foldable body 1 is approximately hollow cylindrical object and internally defines a stretching direction C which is equivalent but not limited to a central axis of the foldable body 1 in this example. Furthermore, the foldable body 1 with circular cross sections perpendicular to the stretching direction C develops fold line units 11 approximately symmetrical about the stretching direction C and two openings 12, 12' at two opposite ends.

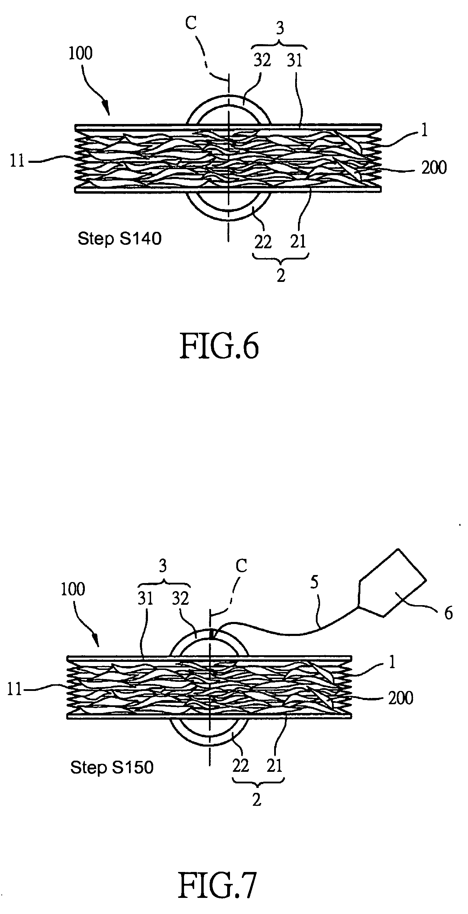

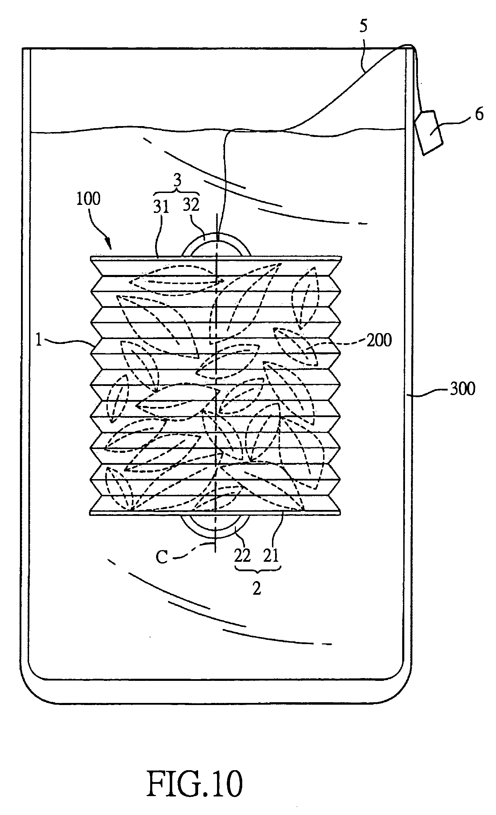

Specifically, each of the fold line units 11 comprises an inward fold line 111 and an outward fold line 112 which are staggered and all inward fold lines 111 (outward fold lines 112) encircle individual cross sections, all of which are approximately equal in size. In other words, each of the outward fold lines 112 is positioned between two adjacent inward fold lines 111. The foldable body 1 has two ends which are adjusted with the fold line units 11 along the stretching direction and arrive at storage positions (FIG. 6) or brewing positions (FIG. 10).

The first lid 2 comprises a first lid body 21, which is a circular plate approximately, and a first pull tab 22.

The first lid body 21 is less deformed than the foldable body 1. Specifically, the first lid body 21 designed herein has thickness (density or hardness) greater than that of the foldable body 1 and makes it deformed insignificantly.

The first pull tab 22 with an approximately arched shape and both ends linking the first lid body 21 allows its central position (i.e., a part away from the first lid 2) to be projected at the first lid body 21 centrally.

Furthermore, the second lid 3 comprises a second lid body 31 and a second pull tab 32 wherein the second lid body 31 is an approximately circular plate with a surface area greater than that of the opening 12' at the other end of the foldable body 1.

The second lid body 31 is less deformed than the foldable body 1. Specifically, the second lid body 31 designed herein has thickness (density or hardness) greater than that of the foldable body 1 and makes it deformed insignificantly.

The second pull tab 32 with an approximately arched shape and both ends linking the second lid body 31 allows its central position (i.e., a part away from the second lid 3) to be projected at the second lid body 31 centrally.

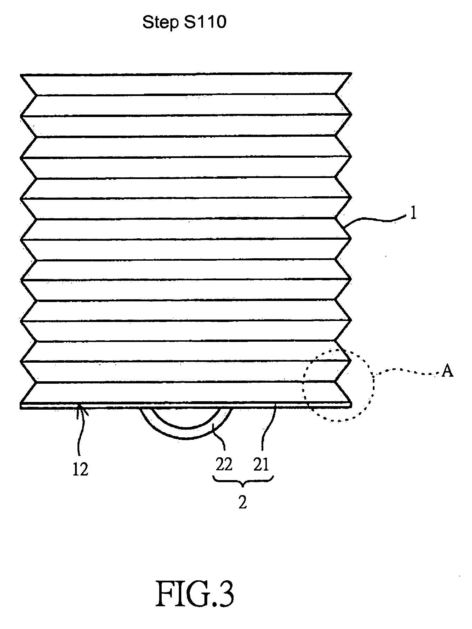

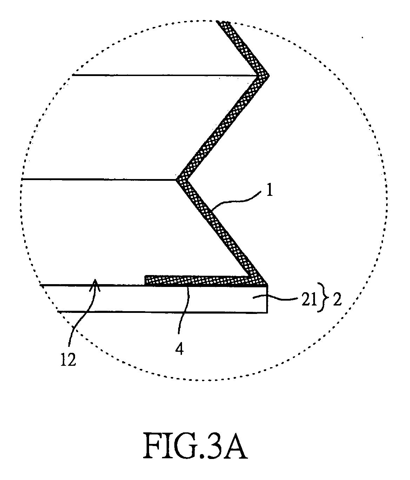

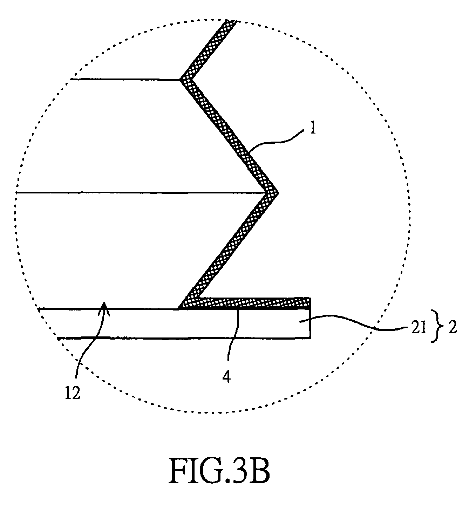

The structure related to the foldable body 1, the first lid 2, and the second lid 3 is presented hereinbefore; a method to manufacture the conjoint foldable covering structure for brewing materials 100 is disclosed in the following sections and accompanying drawings from FIG. 3 to FIG. 8 which illustrate sectional views of the foldable body 1.

As shown in FIG. 3 and FIG. 3A, Step S110 presents the first lid 2 joins one end of the foldable body 1. Specifically, the first lid 2 lets a circular surface part of the first lid body 21, which is opposite to the first pull tab 22, join one end of the foldable body 1 and cover the opening 12 developed at one side of the foldable body 1.

The first lid 2 and the foldable body 1 cohere (connect) by means of methods including, without limitation, food-grade waterproof glue 4, ultrasonic welding, or mechanical joining.

Specifically, the foldable body 1 allows one side to either inward bend and join the first lid body 21 in this example or outward bend and join the first lid body 21 (FIG. 3B).

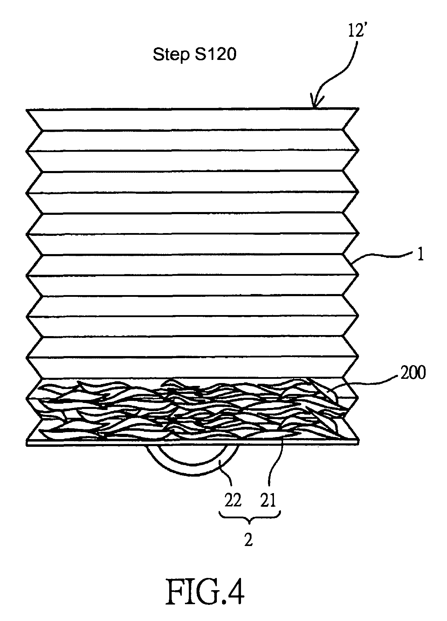

As shown in FIG. 4, Step S120 presents the brewing materials 200 at a first state are poured into the opening 12' developed at the other side of the foldable body 1. Specifically, the brewing materials 200 at a second state should include, without limitation, volume not more than volume surrounded by the foldable body 1 at brewing positions in principle.

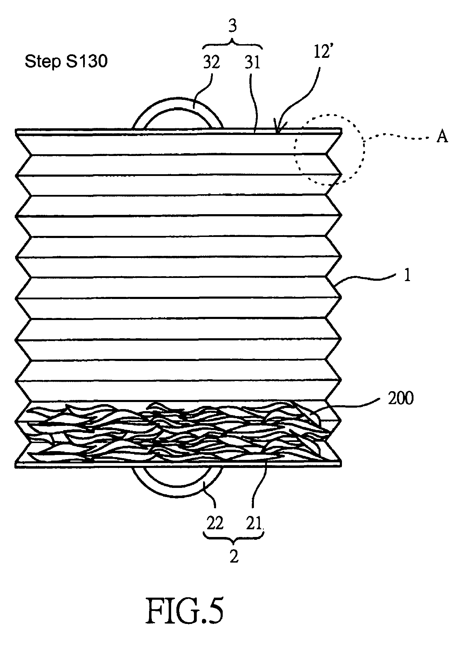

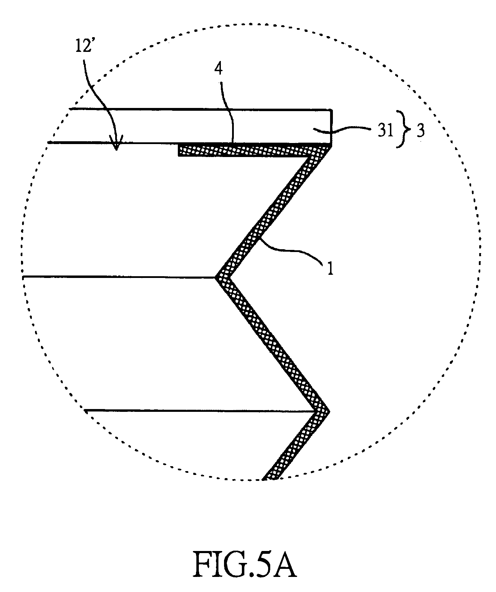

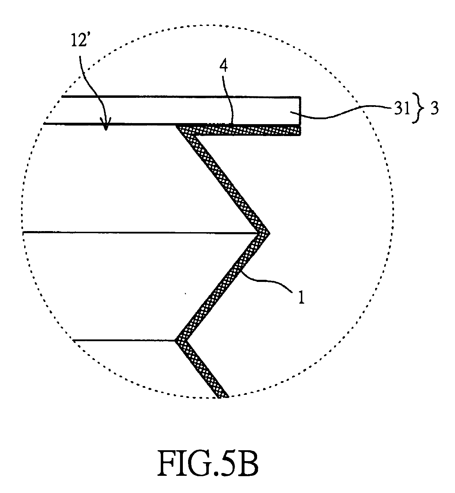

As shown in FIG. 5, Step S130 presents the second lid 3 joins the other end of the foldable body 1. Specifically, the second lid 3 lets a circular surface part of the second lid body 31, which is opposite to the second pull tab 32, join the other end of the foldable body 1 and cover the opening 12' developed at the other side of the foldable body 1.

The second lid 3 and the foldable body 1 cohere (connect) by means of methods including, without limitation, food-grade waterproof glue 4, ultrasonic welding, or mechanical joining.

Specifically, the foldable body 1 allows the other side to either inward bend and join the second lid body 31 in this example or outward bend and join the second lid body 31 (FIG. 5B).

As shown in FIG. 6, Step S140 presents both ends of the foldable body 1 which refers to volume of the poured brewing materials 200 at a first state are adjusted to retractive positions along the stretching direction C through the fold line units 11.

In other words, the volume surrounded by the first lid 2, the foldable body 1, and the second lid 3 is approximately equal to that of the brewing materials 200 at a first state and an initial shape of the brewing materials 200 which are not squeezed or crushed is kept when the brewing materials 200 resist the second lid 3. As such, an appropriate space in which the brewing materials 200 are held is available.

As FIG. 7, Step S150 presents a piece of thread 5 (e.g., a piece of cotton thread) has one end linking the second pull tab 32 on the second lid 3 and the other end linking a paper label 6.

The piece of thread 5 and the second pull tab 32 cohere (connect) by means of methods including, without limitation, binding, food-grade waterproof glue 4, ultrasonic welding, or mechanical joining.

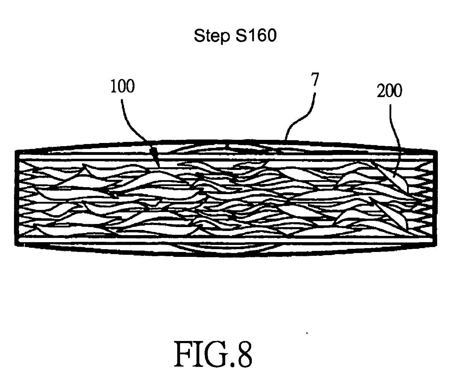

Optionally, Step S160 is also available in manufacture of the conjoint foldable covering structure for brewing materials 100 as per a user's demands. As shown in FIG. 8, the conjoint foldable covering structure for brewing materials 100 is wrapped by a sealed packing material 7 after the first pull tab 22 and the second pull tab 32 are stuck on the first lid body 21 and the second lid body 31, respectively.

As such, the brewing materials 200 which are kept neither damp nor damaged prior to use are encapsulated with the sealed packing material 7 and isolated from ambient environment.

The method to manufacture the conjoint foldable covering structure for brewing materials 100 is shown hereinbefore. The methods to use the conjoint foldable covering structure for brewing materials 100 will be disclosed in the following sections and FIG. 7, FIG. 9, and FIG. 10 (FIG. 9 and FIG. 10: sectional views of the foldable body 1).

It is worth mentioning that the sealed packing material 7 needs to be removed first before execution of Step S160 for manufacture of the conjoint foldable covering structure for brewing materials 100.

A user who intends to place the conjoint foldable covering structure for brewing materials 100 into a container (e.g., teacup) and keeps both ends of the foldable body 1 at brewing positions may refer to instructions including, without limitation, the following two methods in this example.

Method 1 (FIG. 7, FIG. 9, and FIG. 10): Hold the first pull tab 22 and the second pull tab 32 by two hands and stretch them oppositely before brewing; make the foldable body 1 with both ends at retractive positions stretched through the fold line units 11; immerse the conjoint foldable covering structure for brewing materials 100 in the container 300 with water held vertically; keep the paper label 6 with the piece of thread 5 connected beyond the container 300.

At this point, water should be uniformly introduced into the foldable body 1 in which the brewing materials 200 are brewed and stretch; the stretching direction C is parallel to a vertical line.

Finally, the brewing materials 200 (e.g., raw tea leaves) immersed in water swell and resist the first lid 2 and the second lid 3; both ends of the foldable body 1 start to stretch naturally along the stretching direction C and arrive at brewing positions in order to make the brewing materials 200 at a second state appropriately immerse and stretch.

Method 2 (FIG. 7 and FIG. 10): Immerse the conjoint foldable covering structure for brewing materials 100 into the container 300 with water held along a vertical line and keep the paper label 6 with the piece of thread 5 connected beyond the container 300. When the brewing materials 200 immersed in water swell and resist the first lid 2 and the second lid 3, both ends of the foldable body 1 at retractive positions start to stretch naturally along the stretching direction C and arrive at brewing positions in order to make the brewing materials 200 at a second state appropriately immerse and stretch.

As such, the conjoint foldable covering structure for brewing materials 100 adapts to the height of the container 300 and stretches freely with no container lid (e.g., cup lid) closed loosely. However, the lid of a smaller container in which a conventional triangular cube tea bag is held will not be closed tightly because of the tea bag's a convex corner.

In contrast to raw tea leaves as the brewing materials 200 in this example, alternative brewing materials 200 (not shown in figures) such as ground coffee, particularly non-instant ground coffee, do not swell but float while being immersed in water. In this case, a user may stretch the first pull tab 22 and the second pull tab 32, adjusting both ends of the foldable body 1 at retractive positions to brewing positions.

With structure, manufacturing methods and usage of the conjoint foldable covering structure for brewing materials 100 described hereinbefore, the reasons and considerations to design the foldable body 1, the first lid 2, and the second lid 3, all of which are separable and conjoint in the present invention, are disclosed hereinafter.

Principally, the foldable body 1 immersed in water should allow both ends linking the first lid 2 and the second lid 3 to stretch along the stretching direction C and its shape to be maintained.

Specifically, the foldable body 1 completely immersed in water should keep its initial shape with the first lid 2 and the second lid 3 properly strengthened (e.g., increased thickness, density or hardness), that is, the foldable body 1 which bears weight of the brewing materials 200 at a second state should not deform. As such, the brewing materials 200 which are completely immersed in a brewing process are able to stretch totally.

With the first lid 2 and the second lid 3 properly reinforced, the foldable body 1 which has been immersed in water does not float aimlessly or buoy by water partially due to an angle to soak the foldable body 1 in water or water flows and the brewing materials 200 are appropriately soaked. Furthermore, the brewing materials 200 at a second state do not exacerbate weight gain of the foldable body 1 or make the foldable body 1 droopy, deformed, and difficultly lifted.

Additionally, the foldable body 1 with both ends adjusted and arriving at retractive positions along the stretching direction is appropriately protected by the first lid 2 and the second lid 3 and makes sure of no crush of the brewing materials 200 squeezed by external force.

It is worth mentioning that some drawbacks are attributed to an all-in-one design, that is, a design with the foldable body 1, the first lid 2, and the second lid 3 molded simultaneously:
1. Brewing materials are not completely immersed in water when an all-in-one structure, which shifts its center of gravity while soaked into water in a random entrance angle or affected by water flows, floats aimlessly or buoys by water partially.
2. An all-in-one structure completely soaked in water becomes droopy, deformed and difficultly lifted when brewing materials at a second state exacerbate weight gain.
3. Brewing materials squeezed by external force upward or downward crush during manufacturing, transportation or usage.
4. To load (fill) brewing materials into an all-in-one structure is difficult.

It can be seen from the disclosure that the structure with the foldable body 1, the first lid 2, and the second lid 3 designed to be separable and conjoint components contributes to obvious and dramatic effects. Furthermore, it has been proved that a device with separable components is decent as per the descriptions for drawbacks of an all-in-one design.

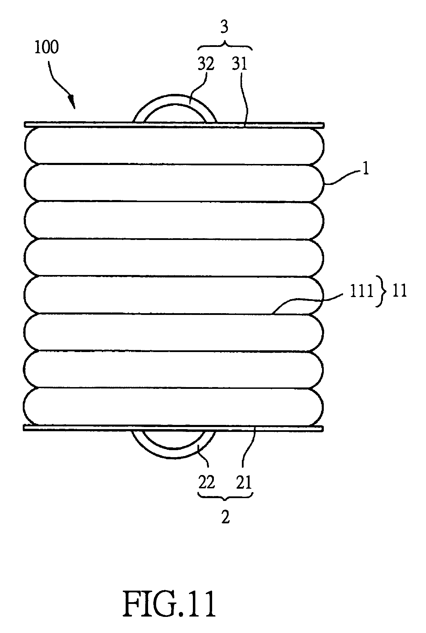

Refer to FIG. 11 that is a sectional view illustrating another example of a brewing structure in which the brewing materials 200 cannot be directly observed. Still, the conjoint foldable covering structure for brewing materials 100 in practical use can be a transparent or translucent device through which the brewing materials 200 can be watched directly.

With the same components presented in the first example and not described hereinafter, the second example which is distinct from the first one is the fold line units 11. Specifically, each of the fold line units 11 in the second example comprises the inward fold line 111 which encircles a cross section with an approximately fixed sectional area; two of the fold line units 11 in the foldable body 1 develop a curved surface in between.

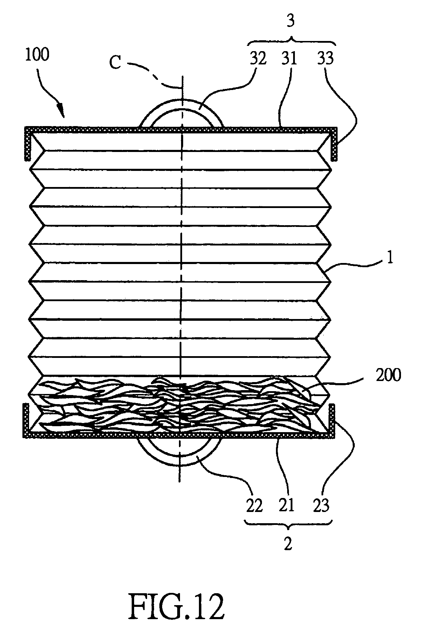

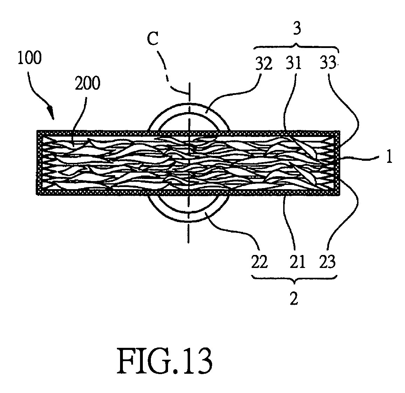

Refer to FIG. 12 and FIG. 13 which are sectional views illustrating the embodiment of the present invention,

With the same components presented in the first example and not described hereinafter, the embodiment which is distinct from the first one is a first upholder 23 and a second upholder 33, which are installed on the first lid 2 and the second lid 3, respectively. Specifically, the first upholder 23 is situated outside junctions of the foldable body 1 and the first lid body 21 and approximately perpendicular to the first lid body 21. Analogically, the second upholder 33 is situated outside junctions of the foldable body 1 and the second lid body 31 and approximately perpendicular to the second lid body 31.

The first upholder 23 is opposite to the second upholder 33, that is, the first upholder 23 and the second upholder 33 resist each other with both ends of the foldable body 1 arriving at retractive positions and prevent the brewing materials 200 held in the foldable body 1 from crush by the first lid 2 and the second lid 3.

Moreover, the first upholder 23 and the second upholder 33, both of which have specific design in height, ensure the conjoint foldable covering structure for brewing materials 100 has constant volume in order to load the quantitative brewing materials 200 and facilitate automatic production when both ends of the foldable body 1 arrive at retractive positions.

Moreover, the first upholder 23 and the second upholder 33 can be designed as other shapes including, without limitation, circular or polygonal shapes.

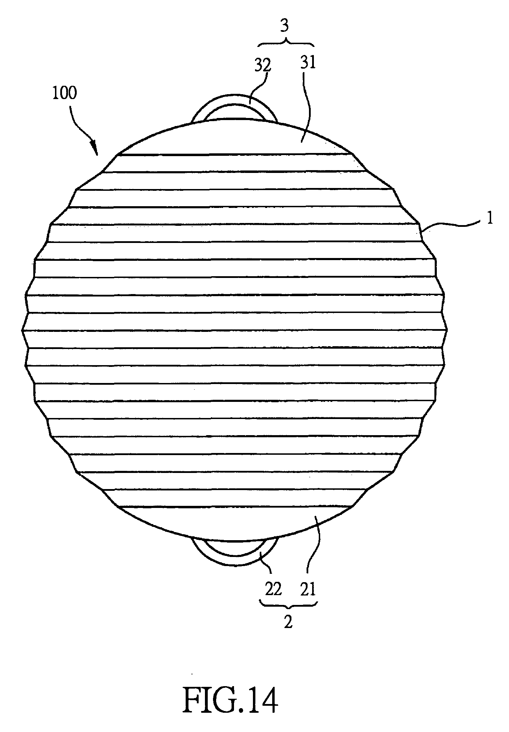

Refer to FIG. 14 that is a sectional view illustrating another example in which the brewing materials 200 cannot be directly observed. Still, the conjoint foldable covering structure for brewing materials 100 in practical use can be a transparent or translucent device through which the brewing materials 200 can be watched directly.

With the same components presented in the first example and not described hereinafter, this example which is distinct from the first one is appearance. Specifically, the foldable body 1, the first lid 2, and the second lid 3 in this example can be designed as spherical shapes which present distinct aesthetics and contribute to enjoyment.

Analogically, the foldable body, the first lid, and the second lid in another embodiment (not shown in drawings) have more shapes in design such as sphere, hemisphere, cone, and others.

Overall, the foldable body, the first lid, and the second lid in a conjoint foldable covering structure for brewing materials in all examples are designed to be separable and conjoint components so that the foldable body immersed in water maintains its shape with both ends adjusted along the stretching direction.

Furthermore, the foldable body with the first lid and the second lid appropriately reinforced is not droopy or deformed when the brewing materials at a second state exacerbate weight gain; the brewing materials held in the foldable body and squeezed by external force do not crush because of protection of the first lid and the second lid.

The brewing materials held in the foldable body and squeezed by external force do not crush when both ends of the foldable body arrive at retractive positions and the first upholder at the first lid resists the second upholder at the second lid.

Additionally, the fold line units can be adjusted or changed as per a designer's demands; the foldable body, the first lid, and the second lid have more shapes in design such as sphere, hemisphere, cone, and others.

The above embodiment hereinbefore is an example of the present invention and should not limit claims of the present invention.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A conjoint foldable covering structure for brewing materials used to accommodate brewing materials at a first state before soak or at a second state after soak and comprising:
a foldable body (1) that allows water flows to penetrate, developing hollow space in which a stretching direction is defined and circular cross sections are perpendicular to said stretching direction, and comprising fold line units (11) and openings (12 and 12') at two opposite ends; and
a first lid (2) and a second lid (3), which join both ends of said foldable body and cover said two openings, and the first lid and the second lid coordinate with said foldable body to surround and define an accommodation space;
said foldable body having both ends adjustably arriving at a retractive position based on the volume of said brewing materials and based on said fold line units along said stretching direction when said brewing materials are at the first state; and said fold line units along said stretching direction also allows both ends to stop at a brewing position based on said fold line units along said stretching direction when said brewing materials are at the second state so that said foldable body can appropriately stretch in a brewing process with a proper shape wherein said foldable body with both ends joined by said first lid and said second lid is also soaked in water;
wherein said first lid comprises a first lid body and a first pull tab: said first lid body has two opposite surfaces which join said foldable body's one side and said first pull tab (22), respectively; said second lid comprises a second lid body and a second pull tab (32); said second lid body has two opposite surfaces which join said foldable body's other side and said second pull tab;
**characterized by** the fact that:
said conjoint foldable covering structure further comprises food-grade waterproof glue by which said first lid and said second lid adhere to both ends of said foldable body;
said foldable body allows both ends to bend inwardly and join said first lid body as well as said second lid body, or said foldable body allows both ends to bend outwardly and join said first lid body as well as said second lid body;
said first lid further comprises a first upholder (23) which is situated beyond junctions of said first lid body (21) and said foldable body and said second lid further comprises a second upholder (33) which is situated beyond junctions of said second lid body (31) and said foldable body;
said first upholder and said second upholder which are oppositely arranged will arrive at a position wherein said first upholder and said second upholder contact with each other when both ends of said foldable body arrive at the retractive position; and
said first upholder and said second upholder are approximately perpendicular to said first lid body and said second lid body, respectively.

2. The conjoint foldable covering structure for brewing materials according to claim 1 further comprises a paper label (6) and a piece of thread (5) with both ends connected to said second lid and said paper label, respectively.

3. The conjoint foldable covering structure for brewing materials according to claim 1 wherein said stretching direction is parallel to a vertical line.

## Patentansprüche

1. Verbundene faltbare Abdeckstruktur für Braumaterialien, um Braumaterialien in einem ersten Zustand vor dem Einweichen aufzunehmen oder in einem zweiten Zustand nach dem Einweichen, mit:
einem faltbaren Körper (1), durch den Wasserströme fließen können, mit einem Hohlraum, in dem eine Dehnrichtung definiert ist und runde Querschnitte senkrecht zu besagter Dehnrichtung sind, mit Faltlinieneinheiten (11) und Öffnungen (12 und 12') an zwei gegenüberliegenden Enden; und
einem ersten Deckel (2) und einem zweiten Deckel (3), die die beiden Enden des faltbaren Körpers verbinden und die beiden Öffnungen abdecken, und der erste Deckel und der zweite Deckel koordinieren sich mit dem faltbaren Körper, um einen Aufnahmeraum zu umgeben und zu definieren;
wobei beide Enden des faltbaren Körpers in verstellbarer Weise in eine Rückstellposition kommen, auf der Grundlage des Volumens der Braumaterialien und auf der Grundlage der Faltlinieneinheiten entlang der Dehnrichtung, wenn die Braumaterialien im ersten Zustand sind; und die Faltlinieneinheiten entlang der Dehnrichtung gestattet es auch, dass beide Enden in einer Brauposition stoppen, auf der Grundlage der Faltlinieneinheiten entlang der Dehnrichtung, wenn die Braumaterialien im zweiten Zustand sind, so dass der faltbare Körper sich in einem Brauverfahren mit einer geeigneten Form passend strecken kann, wobei der faltbare Körper, dessen beide Enden durch den ersten Deckel und zweiten Deckel verbunden sind, auch in Wasser eingeweicht wird;
wobei der erste Deckel einen ersten Deckelkörper und eine erste Abziehlasche umfasst: der erste Deckelkörper hat zwei gegenüberliegende Oberflächen, die jeweils die eine Seite des faltbaren Körpers und die erste Abziehlasche (22) verbinden; der zweite Deckel umfasst einen zweiten Deckelkörper und eine zweite Abziehlasche (32); der zweite Deckelkörper hat zwei gegenüberliegende Oberflächen, die die andere Seite des faltbaren Körpers und die zweite Abziehlasche verbinden;
**dadurch gekennzeichnet, dass**:
die verbundene faltbare Abdeckstruktur des Weiteren lebensmittelverträglichen wasserdichten Klebstoff umfasst, wodurch der erste Deckel und der zweite Deckel an beiden Enden des faltbaren Körpers haften;
der faltbare Körper es beiden Enden gestattet, sich nach innen zu biegen und den ersten Deckelkörper sowie den zweiten Deckelkörper zu verbinden, oder der faltbare Körper es beiden Enden gestattet, sich nach außen zu biegen und den ersten Deckelkörper sowie den zweiten Deckelkörper zu verbinden;
der erste Deckel des Weiteren eine erste Stütze (23) umfasst, die jenseits von Verbindungsstellen des ersten Deckelkörpers (21) und des faltbaren Körpers liegt, und der zweite Deckel des Weiteren eine zweite Stütze (33) umfasst, die jenseits von Verbindungsstellen des zweiten Deckelkörpers (31) und des faltbaren Körpers liegt;
die erste Stütze und die zweite Stütze, die entgegengesetzt angeordnet sind, an einer Stelle ankommen, an der die erste Stütze und die zweite Stütze in Kontakt miteinander stehen, wenn beide Enden des faltbaren Körpers in der Rückstellposition ankommen; und
die erste Stütze und die zweite Stütze ungefähr senkrecht zu dem ersten Deckelkörper bzw. dem zweiten Deckelkörper sind.

2. Die verbundene faltbare Abdeckstruktur für Braumaterialien nach Anspruch 1 umfasst des Weiteren ein Papieretikett (6) und ein Stück Faden (5), dessen beide Enden mit dem zweiten Deckel bzw. dem Papieretikett verbunden sind.

3. Verbundene faltbare Abdeckstruktur für Braumaterialien nach Anspruch 1, wobei die Dehnrichtung parallel zu einer senkrechten Linie ist.

## Revendications

1. Structure de recouvrement pliable conjointe pour matières brassicoles, utilisée pour recevoir des matières brassicoles dans un premier état avant trempage ou dans un second état après trempage et comprenant :
un corps pliable (1) qui permet à des écoulements d'eau d'y pénétrer, développant un espace creux dans lequel une direction d'étirement est définie, et des sections transversales circulaires sont perpendiculaires à ladite direction d'étirement, et comprenant des unités de ligne de pliage (11) et des ouvertures (12 et 12') à deux extrémités opposées ; et
un premier couvercle (2) et un second couvercle (3), qui sont reliés aux deux extrémités dudit corps pliable et recouvrent lesdites deux ouvertures, et le premier couvercle et le second couvercle se coordonnent avec ledit corps pliable pour entourer et définir un espace de logement ;
ledit corps pliable ayant les deux extrémités arrivant de façon ajustable à une position rétractée basée sur le volume desdits matières brassicoles et basée sur lesdites unités de ligne de pliage selon ladite direction d'étirement lorsque lesdits matières brassicoles sont dans le premier état ; et lesdites unités de ligne de pliage selon ladite direction d'étirement permettent également aux deux extrémités de s'arrêter à une position de brassage basée sur lesdites unités de ligne de pliage selon ladite direction d'étirement lorsque lesdits matières brassicoles sont dans le second état de telle sorte que ledit corps pliable peut s'étirer de façon appropriée dans un processus de brassage avec une forme appropriée, ledit corps pliable avec les deux extrémités reliées par ledit premier couvercle et ledit second couvercle étant également trempé dans de l'eau ;
ledit premier couvercle comprenant un premier corps de couvercle et une première tirette ; ledit premier corps de couvercle a deux surfaces opposées qui sont reliées à un côté dudit corps pliable et à ladite première tirette (22), respectivement ; ledit second couvercle comprend un second corps de couvercle et une seconde tirette (32) ; ledit second corps de couvercle a deux surfaces opposées qui sont reliées à l'autre côté dudit corps pliable et à ladite seconde tirette ;
**caractérisée par le fait que** :
ladite structure de recouvrement pliable conjointe comprend en outre de la colle étanche à l'eau et de qualité alimentaire par laquelle ledit premier couvercle et ledit second couvercle adhèrent aux deux extrémités dudit corps pliable ;
ledit corps pliable permet aux deux extrémités de se courber vers l'intérieur et de réunir ledit premier corps de couvercle ainsi que ledit second corps de couvercle, ou ledit corps pliable permet aux deux extrémités de se courber vers l'extérieur et de réunir ledit premier corps de couvercle ainsi que ledit second corps de couvercle ;
ledit premier couvercle comprend en outre un premier support (23) qui est situé au-delà de jonctions dudit premier corps de couvercle (21) et dudit corps pliable, et ledit second couvercle comprend en outre un second support (33) qui est situé au-delà de jonctions dudit second corps de couvercle (31) et dudit corps pliable ;
ledit premier support et ledit second support qui sont agencés de façon opposée arriveront à une position dans laquelle ledit premier support et ledit second support entrent en contact l'un avec l'autre lorsque les deux extrémités dudit corps pliable arrivent à la position rétractée ; et
ledit premier support et ledit second support sont approximativement perpendiculaires audit premier corps de couvercle et audit second corps de couvercle, respectivement.

2. Structure de recouvrement pliable conjointe pour matières brassicoles selon la revendication 1, comprenant en outre une étiquette en papier (6) et un morceau de fil (5) avec les deux extrémités reliées audit second couvercle et à ladite étiquette en papier, respectivement.

3. Structure de recouvrement pliable conjointe pour matières brassicoles selon la revendication 1, dans laquelle ladite direction d'étirement est parallèle à une ligne verticale.
